# EUROPÄISCHE PATENTANMELDUNG

(11) **EP 3 462 137 A1**
(43) Veröffentlichungstag der Anmeldung: **03.04.2019**
(21) Anmeldenummer: 17194119.8
(22) Anmeldetag: 29.09.2017
(51) Int. Cl.: G01D 5/00, G01P 3/48

(54) **VORRICHTUNG BZW. VERFAHREN ZUR ERFASSUNG EINER ROTATION EINES KÖRPERS**

(71) Anmelder: Siemens Aktiengesellschaft, 80333 München (DE)
(72) Erfinder: Klos, Hans-Henning, 91249 Weigendorf (DE); Scheibner, Dirk, 90473 Nürnberg (DE); Schimmer, Jürgen, 90473 Nürnberg (DE)

(57) **Zusammenfassung**

Ein Vorrichtung (10) ist zur Erfassung einer Rotation eines rotierbaren Körpers (11) vorgesehen, wobei ein erstes Element (1,2,3,4,5,6) zur Erzeugung von Schalldruck vorgesehen ist, wobei der erzeugbare Schalldruck abhängig ist von der Rotationsrichtung des Körpers (11). Das erste Element (1,2,3,4,5,6) unterscheidet sich insbesondere von einem zweiten Element (1,2,3,4,5,6) durch die Ausgestaltung. Dabei ist z.B. eine sich durch eine Rotation ergebende Abfolge der schalldruckerzeugenden Elemente (1,2,3,4,5,6) des ersten (1,4,6) und zweiten Typs (2,3,5), abhängig von der Rotationsrichtung des Körpers (11) unterschiedlich. So wird insbesondere die Rotation eines rotierbaren Körpers (1) erfasst, wobei ein durch die Rotation hervorgerufener Schalldruck ermittelt wird und auf Grundlage des ermittelten Schalldrucks eine Rotationsrichtung erkannt wird.

## Beschreibung

Die vorliegende Erfindung betrifft eine Vorrichtung bzw. ein Verfahren zur Erfassung einer Rotation eines Körpers.

Der Körper, dessen Rotation zu erfassen ist, ist beispielsweise der Rotor einer elektrischen Maschine, wie einer Asynchronmaschine, einer Synchronmaschine, einer Gleichstrommaschine. Der Körper kann beispielsweise auch ein Lüfter einer elektrischen Maschine, eines Getriebes, einer Pumpe, etc. sein. Bei einer elektrischen Maschine ist der Lüfter insbesondere ein Fremdlüfter oder ein Eigenlüfter. Elektrische Maschinen wie Motoren bzw. Generatoren können Geber aufweisen, die insbesondere zur Bestimmung einer Position oder Lage Verwendung finden. Eine rotatorische elektrische Maschine kann aber auch derart ausgestaltet sein, dass diese geberlos betrieben wird. Gerber von elektrischen Maschinen, wie insbesondere Drehgeber, basieren z.B. auf einem induktiven Verfahren oder auf einem optischen Verfahren. Geber wie Inkrementalgeber können derart ausgestaltet sein, dass mit diesen nicht nur eine Lage, sondern auch eine Drehrichtung feststellbar ist. In einem Sensorkopf eines Gebers können beispielsweise zwei Drehzahlsensoren angeordnet sein um einen Drehzahlsensor mit Drehrichtungserkennung zu realisieren. Auch mit Encodern, welche eine hohe Winkelauflösung bieten können, kann eine Drehrichtungserkennung realisiert werden. Geber können auf einem optischen oder induktiven Verfahren basieren. Derartige Geber sind teuer in der Herstellung.

Neben einem Geber können auch weitere Instrumente den Zustand einer elektrischen Maschine ermitteln. So ist von der KSB Aktiengesellschaft beispielsweise eine App für ein Smartphone bekannt, welche die Geräuschfrequenz eines Asynchronmotors misst und prüft, ob Energieeinsparpotenziale vorhanden sind, durch die sich eine Steigerung einer Pumpeneffizienz erreichen lässt. Dabei verwendet die App einen Schätz-Algorithmus.

Eine Aufgabe der Erfindung ist es eine Vorrichtung bzw. ein Verfahren zur Erfassung einer Rotation eines Körpers anzubieten. Diese Vorrichtung bzw. dieses Verfahren ist insbesondere ein einfach und robust ausführbar.

Eine Lösung der Aufgabe ergibt sich bei einer Vorrichtung nach Anspruch 1 bzw. bei einem Verfahren nach Anspruch 12. Ausgestaltungen ergeben sich insbesondere gemäß der Ansprüche 2 bis 11 und 13 bis 15. Dabei können die beschriebenen Ausgestaltungen des Verfahrens und der Vorrichtung miteinander kombiniert werden.

Eine Vorrichtung zur Erfassung einer Rotation eines rotierbaren Körpers weist ein erstes Element auf, das zur Erzeugung von Schalldruck vorgesehen ist, wobei der erzeugbare Schalldruck abhängig ist von der Rotationsrichtung des Körpers. Der rotierbare Körper ist beispielsweise ein Rotor einer elektrischen Maschine, ein Lüfter, insbesondere zur Kühlung der elektrischen Maschine oder dergleichen. Das Element zur Erzeugung des Schalldrucks, also zumindest das erste Element und/oder weitere derartige Elemente, ist beispielsweise zumindest ein Teil des rotierbaren Körpers. Das Element zur Erzeugung des Schalldrucks kann beispielsweise zumindest ein Teil eines Lüfters, eines Lüfterflügels, einer Lüfterrippe oder dergleichen sein. Mittels des Schalldrucks kann insbesondere ein Geräusch erzeugt werden. Mittels des Schalldrucks kann aber auch z.B. Ultraschall erzeugt werden.

Wird beispielsweise das insbesondere erste Element zur Erzeugung von Schalldruck in einer erste Richtung rotiert, so ergibt sich hieraus ein Schalldruck. Erfolgt eine Rotation in einer entgegengesetzten zweiten Richtung, ergibt sich ein von der ersten Richtung unterschiedlicher Schalldruck. Der Schalldruck wird mittels eines Sensors (insbesondere ein Mikrofon) aufgenommen. Die Unterschiede im Schalldruck werden mittels einer Signalauswertung erkannt und es wird abhängig vom Schalldruck auf eine Drehrichtung geschlossen und diese beispielsweise über eine Anzeige einem Menschen dargestellt.

In einer Ausgestaltung der Vorrichtung weist ein Lüfterrad Unregelmäßigkeiten der Lüfterblätter auf. So weisen insbesondere einzelne Lüfterblätter eine Unregelmäßigkeit auf. Diese erzeugen einen charakteristischen Druckschlag, der durch ein Mikrofon erfasst wird. Aus der richtungsabhängigen Reihenfolge des Auftretens der Unregelmäßigkeiten, also der Anomalie, wird auf die Drehrichtung geschlossen. Die Unregelmäßigkeiten eines Lüfters, eines Lüfterrades und/oder von Lüfterflügeln des Lüfterrades können sich auch durch Fertigungstoleranzen ergeben. Durch Fertigungstoleranzen kann sich also automatisch eine drehrichtungsabhängige Schalldruckerzeugung ergeben.

In einer Ausgestaltung der Vorrichtung ist das erste Element z.B. eine Lüfterhaube bzw. ein Teil davon. Die Lüfterhaube ist derart ausgestaltet, dass abhängig von der Drehrichtung des Lüfters ein unterschiedlicher Schalldruck entsteht, so dass die Drehrichtung des Lüfters erkannt werden kann. So kann der Lüfter symmetrisch ausgestaltet sein. Eine Anisotropie ergibt sich durch die Lüfterhaube. Beispielsweise können hierfür Luftauslässe der Lüfterhaube eine Asymmetrie aufweisen.

Die Rotationsrichtungserkennen (auch Drehrichtungserkennung genannt) an rotierenden Anlagen bzw. Maschinen stellt eine Funktion dar, welche verschieden Aufgaben erfüllen kann. Die Rotationsrichtungserkennen kann z.B. für eine Kontrolle einer korrekten Inbetriebnahme eines Antriebs genutzt werden und/oder für eine Überwachung (Monitoring) des Betriebs einer Anlage bzw. Maschine, und/oder für eine zustandsbasierte Wartung.

In einer Ausgestaltung der Vorrichtung weist diese ein zweites Element zur Erzeugung von Schalldruck, wobei das erste Element insbesondere eine vom zweiten Element unterschiedliche Ausgestaltung aufweist. Das erste Element ist beispielsweise zumindest ein Teil eines ersten Lüfterflügels. Das zweite Element ist beispielsweise zumindest ein Teil eines zweiten Lüfterflügels. In einer Ausgestaltung weist die Vorrichtung eine Vielzahl von derartigen Elementen auf, also z.B. drei, vier, fünf, sechs oder mehr Lüfterflügel. Durch den Schalldruck lässt sich auch eine Signalfolge erzeugen, wobei die Signalfolge insbesondere digital ist. Die Signalfolge kann also in eine bestimmte Folge von 0 und 1 Werten transformiert werden. Diese Abfolge der 0 und 1 Werte ergibt sich insbesondere aus der entsprechenden Abfolge der Elemente, welche entweder einem ersten Typ entsprechen oder einem zweiten Typ entsprechen. Durch unterschiedliche Ausgestaltungen der Elemente ergeben sich unterschiedliche Typen von Elementen.

In einer Ausgestaltung der Vorrichtung ist eine sich durch eine Rotation ergebende Abfolge der signalerzeugenden Elemente, welche einem ersten oder eine zweiten Typ entsprechen, abhängig von der Rotationsrichtung des Körpers. Durch die unterschiedliche Abfolge der Elemente lässt sich ein von der Drehrichtung abhängiger Schalldruck erzeugen, welcher mittels eines Sensors erkannt wird, wobei mittels einer Signalauswertung die Drehrichtung erkannt wird.

In einer Ausgestaltung der Vorrichtung ist das erste Element zumindest ein Teil eines ersten Lüfterflügels und/oder das zweite Element zumindest ein Teil eines zweiten Lüfterflügels (ein Lüfterflügel kann auch als ein Lüfterblatt bezeichnet werden). In einer Ausgestaltung sind die Lüfterflügel eines Lüfters so geformt, dass ein erzeugter Schalldruck (insbesondere ein Geräusch) drehrichtungsabhängig ist, wobei die Form beispielsweise eine geometrische Grundform des Lüfterflügels betrifft und/oder die Oberfläche des oder der Lüfterflügel. So können z.B. zwei Typen von Oberflächen vorgesehen sein, wobei insbesondere ein Lüfterflügel nur einen Oberflächentyp aufweist. Der Typ betrifft insbesondere eine Struktur, welche z.B. geprägt ist oder durch ein Spritzgussverfahren oder durch einen 3D-Druck erstellt ist, auf der Oberfläche des Lüfterflügels. So können unterschiedliche Strukturen für unterschiedliche Typen vorhanden sein, wobei mit den unterschiedlichen Strukturen unterschiedliche Schalldrücke erzeugbar sind.

In einer Ausgestaltung der Vorrichtung ist ein Lüfterflügel ganz oder teilweise anisotrop in Bezug zur Anströmung geformt. So lässt sich z.B. mit nur einem Typ von Lüfterflügel die Drehrichtung erkennen, da sich ein Unterschied des Schalldrucks durch die unterschiedliche Anströmung abhängig von der Drehrichtung ergibt.

In einer Ausgestaltung der Vorrichtung weist zumindest ein Lüfterflügel auf seiner Oberfläche eine Struktur und/oder Strukturen auf, wobei die Struktur/Strukturen insbesondere geprägt sind, welche, analog zu einer Pfeife mit unterschiedlichem Geräusch je nach Strömungsrichtung der Luft, einen unterschiedlichen Schalldruck (insbesondere ein Geräusch) je nach Strömungsrichtung der Luft erzeugen kann.

In einer Ausgestaltung der Vorrichtung ist das erste Element und/oder das zweite Element anisotrop ausgebildet, wobei die Anisotropie insbesondere die Anströmung des zumindest einen Elementes bei einer Rotation betrifft. Die Anisotropie betrifft dabei die Richtungsabhängigkeit einer Eigenschaft oder eines Vorgangs.

In einer Ausgestaltung der Vorrichtung weist das erste Element eine vom zweiten Element unterschiedliche Geometrie auf. So kann durch eine unterschiedliche bzw. spezielle Ausformung der Lüfterflügel eines Lüfters mit nur einem Sensor, wie einem Mikrofon oder Drucksensor, aus dem charakteristischen Lüftergeräusch auf die Drehrichtung des Lüfters geschlossen werden.

In einer Ausgestaltung der Vorrichtung weist das erste Element eine vom zweiten Element unterschiedliche Oberfläche auf. Auch so kann durch eine unterschiedliche bzw. spezielle Oberfläche der Lüfterflügel eines Lüfters mit nur einem Sensor, wie einem Mikrofon oder Drucksensor, aus dem charakteristischen Lüftergeräusch auf die Drehrichtung des Lüfters geschlossen werden.

In einer Ausgestaltung der Vorrichtung weist diese eine Vielzahl von Elementen auf, wobei deren Abfolge anisotrop, insbesondere spiegelsymmetrisch bezüglich der Rotationsrichtung, ist.

In einer Ausgestaltung der Vorrichtung weist diese auch den Sensor, insbesondere ein Mikrofon oder ein Drucksensor, zur Erfassung des Schalldrucks auf. Der Sensor ist insbesondere in der Nähe des Lüfterrades positioniert. So kann der Sensor beispielsweise in einem Raum fest positioniert sein, welcher durch eine Lüfterhaube zumindest teilweise begrenzt ist.

In einer Ausgestaltung der Vorrichtung kann der Sensor und/oder die Signalauswertung in einer mobilen Einrichtung (mobile device), wie z.B. einem Smartphone oder einem Tablet integriert sein. Die Erfindung kann damit auch eine mobile Einrichtung betreffen, welche zur Auswertung eines Schalldrucks vorgesehen ist, welche durch eine der beschriebenen Vorrichtungen erzeugbar ist. Ferner kann die Erfindung damit auch eine mobile Einrichtung betreffen, welche zur Durchführung eines Verfahrens zur Erfassung einer Rotation eines rotierbaren Körpers vorgesehen ist, wobei insbesondere eine der beschriebenen Vorrichtungen zur Erzeugung eines Schalldrucks genutzt wird.

In einer Ausgestaltung der Vorrichtung weist diese einen einem Datenspeicher auf, welcher erste Schalldruckdaten einer Rotationsrichtung in einem ersten Zeitraum bzw. eines ersten Zeitraums speichert und eine Vergleichseinrichtung, welche die ersten Schalldruckdaten mit zweiten Schalldruckdaten eines dem ersten Zeitraum nachfolgenden zweiten Zeitraums vergleicht. Der Datenspeicher und/oder die Vergleichseinrichtung ist beispielsweise in einer mobilen Einrichtung (z.B. ein Handy), einem Motormodul oder einem Stromrichter integriert.

Nach einem Verfahren zur Erfassung einer Rotation eines rotierbaren Körpers wird ein durch die Rotation hervorgerufener Schalldruck ermittelt und auf Grundlage des ermittelten Schalldrucks eine Rotationsrichtung erkannt. Hierfür kann z.B. in der Nähe eines Lüfterrades ein feststehendes Mikrofon, als ein Sensor, installiert werden. Alternativ ist auch ein Drucksensor denkbar.

Durch das Verfahren kann eine Überwachung der Rotation eines rotierenden Körpers erreicht werden, wobei akustische Signale gemessen werden, welche durch Luftbewegungen aufgrund der Rotation des Körpers verursacht sind. Die Bestimmung der Drehrichtung des rotierenden Körpers erfolgt durch die Analyse der aufgenommenen Signale. Durch den Sensor können akustische Signale gemessen werden, die durch die Luftbewegungen aufgrund der Rotation des Körpers verursacht sind. Solche Luftbewegungen entstehen insbesondere durch hervorstehende Strukturen und/oder Vertiefungen an der Peripherie des rotierenden Körpers. Es genügt prinzipiell eine einzelne solche hervorstehende Struktur und/oder Vertiefung an der Peripherie des Körpers, um einen sogenannten "Druckschlag" in der umgebenden Luft und somit ein messbares akustisches Signal zu bewirken. Ein solcher Druckschlag führt zu einem durch die Rotation periodisch wiederkehrenden Extrempunkt (meist einem Maximum) in der von dem Sensor gemessenen Signalfolge. Eine Drehrichtung weist ein ihr spezifisches Signal bzw. eine ihr spezifische Signalfolge auf. So können die zwei Drehrichtungen unterschieden werden und damit auf die Drehrichtung geschlossen werden. Die jeweiligen Signale (Signalfolgen) können in ihrer Art und/oder Frequenz von der Drehgeschwindigkeit (also der Drehzahl) abhängen. Die akustische Messung der Druckschläge in der Luft erlaubt eine apparativ sehr einfache Überwachung des Rotationszustandes eines rotierenden Körpers, da akustische Signale (auch im Vergleich zu optischen und oder induktiven Signalen) vergleichsweise empfindlich gemessen sowie leicht aufgearbeitet und ausgewertet werden können.

In einer Ausgestaltung des Verfahrens weisen eine Vielzahl von rotatorisch bewegbaren Elementen jeweils zumindest eine hervorstehende Struktur und/oder wenigstens eine Einbuchtung auf. Dabei ist diese wenigstens eine hervorstehende Struktur und/oder Einbuchtung insbesondere so ausgestaltet, dass sie bei der Rotation des Körpers einen Druckschlag in der Umgebungsluft verursachen kann. Ein Mikrofon ist so ausgestaltet, dass es einen Druckschlag in der Umgebungsluft detektieren kann, welcher durch eine solche hervorstehende Struktur und/oder Einbuchtung am rotierenden Bauteils verursacht ist. Die Druckschläge werden gespeichert und mit Vergleichsdaten verglichen.

In einer Ausgestaltung des Verfahrens wird der ermittelte Schalldruck mit einem zuvor ermittelten Schalldruck korreliert. Mit diesem mathematischen Verfahren kann eine hohe Zuverlässigkeit der Drehrichtungserkennung erreicht werden.

In einer Ausgestaltung des Verfahrens wird die drehrichtungsabhängige Geräuschbildung, welche sich beispielsweise durch Herstellungstoleranzen und/oder durch extra eingebrachte Anomalien ergibt, in einem Herstellungswerk in beide Richtungen vermessen. Das Herstellungswerk ist beispielsweise das Werk zur Herstellung eines Lüfterrades, welches insbesondere Lüfterflügel aufweist, oder das Werk zur Herstellung elektrischer Maschinen, an welche ein Kühllüfter angebracht ist. Die Vermessung kann beispielsweise auch bei einer Inbetriebsetzung einer elektrischen Maschine mit einem derartigen Lüfter erfolgen.

Wird die Vermessung in einem Werk vorgenommen, kann diese z.B. mit einer Messung bei der Inbetriebnahme mit dem dort auftretenden Geräusch mittels einer Korrelationsfunktion korreliert werden. Entspricht das Geräusch dem im Werk aufgenommenen Signal, so erhält man eine hohe Korrelation und kann darauf schließen, dass es sich um die Drehrichtung des im Werk aufgenommenen Signals handelt. Bei niedriger Korrelation mit beiden im Werk aufgenommenen Signalen wird einem Nutzer beispielsweise mitgeteilt, dass die Drehrichtungserkennung nicht funktioniert, oder ein Motor mit Drehspannung elektrisch falsch angeschlossen wurde.

In einer Ausgestaltung des Verfahrens wird ein anisotroper Schalldruck erzeugt und erkannt. Der anisotrope Schalldruck ergibt sich insbesondere durch eine der beschriebenen Vorrichtungen.

Durch das Verfahren bzw. die beschriebene Vorrichtung ist es möglich mittels nur eines Sensors (Mikrofon) die Drehrichtung eines Körpers zu erkennen, welcher unterschiedliche Schalldrücke bzw. periodische Schalldruckabfolgen für unterschiedliche Rotationsrichtungen (Drehrichtungen) erzeugt. Das Mikrofon, also der Sensor, muss nicht direkt am Lüfter angeordnet sein und kann auch für weitere akustische Überwachungsaufgaben verwendet werden.

Nachfolgend wird die Erfindung anhand von Ausführungsbeispielen exemplarisch unter Bezugnahme auf die Figuren beschrieben. Dabei zeigt:
- FIG 1: Vorrichtung zur Erfassung einer Rotation eines rotierbaren Körpers;
- FIG 2: ein Schalldrucksignal einer ersten Drehrichtung und
- FIG 3: ein Schalldrucksignal einer zweiten Drehrichtung.

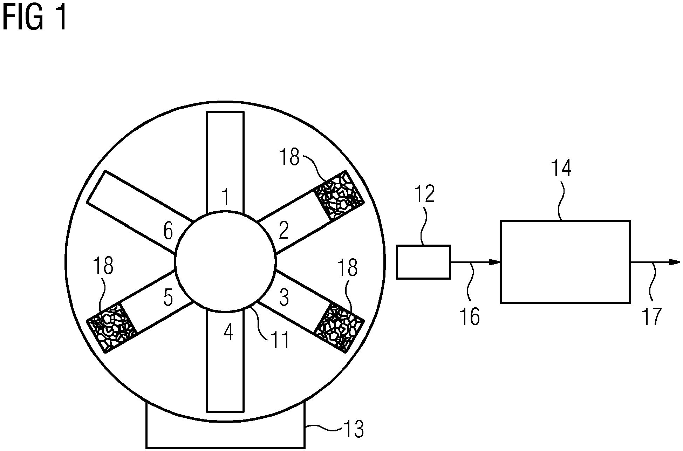

Die Darstellung nach FIG 1 zeigt eine Vorrichtung 10 zur Erfassung einer Rotation eines rotierbaren Körpers 11. Der rotierbare Körper 11 ist ein Lüfterrad 11, welches sechs Lüfterflügel 1, 2, 3, 4, 5 und 6 aufweist. Das Lüfterrad 11 dient der Kühlung eines Motors 13. Die Lüfterflügel 1, 2, 3, 4, 5 und 6 sind Elemente zur Erzeugung von Schalldruck. Der Schalldruck kann durch ein Mikrofon 12 aufgenommen werden.

Das aufgenommene Schalldrucksignal 16 wird in einer Signalauswertung 14, welche eine Vergleichsauswertung ist, ausgewertet. Das Ergebnis der Auswertung ist ein Ergebnissignal 17. Das Ergebnissignal 17 gibt beispielsweise die Drehrichtung und/oder die Drehzahl an.

Die Lüfterflügel 1, 2, 3, 4, 5 und 6 sind von unterschiedlichem Typ. Ein erster Typ betrifft die Lüfterflügel 1, 4 und 6. Ein zweiter Typ betrifft die Lüfterflügel 2, 3 und 5. Der erste Typ weist radial äußere Endbereiche auf, welche glatt sind. Der zweite Typ weist radial äußere Endbereiche auf, welche eine strukturierte Oberfläche 18 aufweisen. Diese strukturierte Oberfläche 18 kann auch als Anomalie bezeichnet werden. Die Abfolge der Typen ist nicht rotationssymmetrisch. Es liegt eine Asymmetrie bezüglich der Rotationsreihenfolge vor. Die einzelnen Lüfterblätter weisen also Unregelmäßigkeiten auf, welche bei Rotation einen charakteristischen Druckschlag erzeugen, der durch das Mikrofon 12 erfasst wird. Aus der richtungsabhängigen Reihenfolge des Auftretens der Anomalien wird auf die Drehrichtung geschlossen.

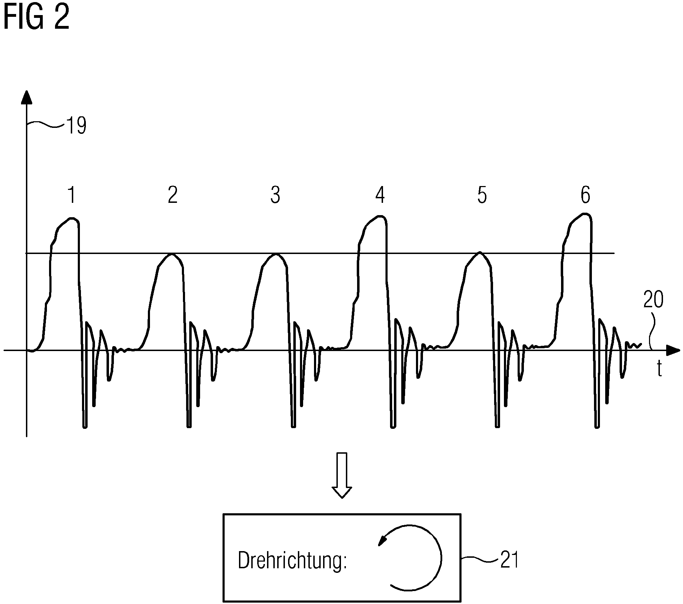

Die Darstellung nach FIG 2 zeigt ein Schalldrucksignal einer ersten Drehrichtung. In einem Diagramm ist für den Schalldruck der Schalldruckpegel 19 über die Zeit 20 aufgetragen, wenn sich das Lüfterrad 11 nach FIG 1 entgegen der Uhrzeigerrichtung dreht. Gezeigt ist die Abfolge der Signale, welche durch die Lüfterflügel 1, 2, 3, 4, 5 und 6 hervorgerufen werden. Aus der Abfolge der unterschiedlichen Schallpegelamplituden, also aus der richtungsabhängigen Reihenfolge des Auftretens von Anomalien und der Kenntnis über die Abfolge der Lüfterflügel (siehe FIG 1), kann auf die Drehrichtung geschlossen werden, welche beispielsweise in einer Anzeigeeinrichtung 21 hier als Linksdrehung angezeigt wird.

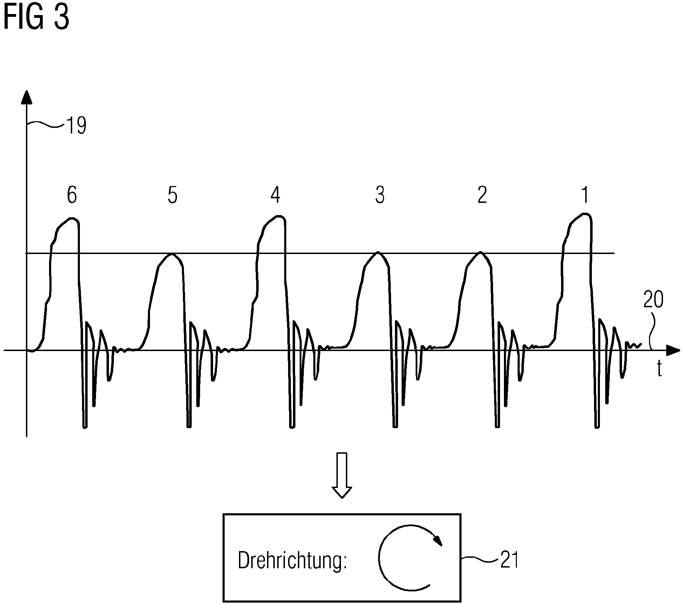

Die Darstellung nach FIG 3 zeigt ein Schalldrucksignal einer zweiten Drehrichtung. In einem Diagramm ist für den Schalldruck der Schalldruckpegel 19 über die Zeit 20 aufgetragen, wenn sich das Lüfterrad 11 nach FIG 1 in Uhrzeigerrichtung dreht. Gezeigt ist die Abfolge der Signale, welche durch die Lüfterflügel 1, 2, 3, 4, 5 und 6 hervorgerufen werden. Aus der Abfolge der unterschiedlichen Schallpegelamplituden, also aus der richtungsabhängigen Reihenfolge des Auftretens von Anomalien und der Kenntnis über die Abfolge der Lüfterflügel (siehe FIG 1), kann auf die Drehrichtung geschlossen werden, welche beispielsweise in einer Anzeigeeinrichtung 21 hier als Rechtsdrehung angezeigt wird.

## Patentansprüche

1. Vorrichtung (10) zur Erfassung einer Rotation eines rotierbaren Körpers (11), wobei ein erstes Element (1,2,3, 4,5,6) zur Erzeugung von Schalldruck vorgesehen ist, wobei der erzeugbare Schalldruck abhängig ist von der Rotationsrichtung des Körpers (11).

2. Vorrichtung (10) nach Anspruch 1, mit einem zweiten Element (1,2,3,4,5,6) zur Erzeugung von Schalldruck, wobei das erste Element (1,2,3,4,5,6) insbesondere eine vom zweiten Element (1,2,3,4,5,6) unterschiedliche Ausgestaltung aufweist.

3. Vorrichtung (10) nach Anspruch 1 oder 2, wobei eine sich durch eine Rotation ergebende Abfolge der schalldruckerzeugenden Elemente (1,2,3,4,5,6) des ersten (1,4,6) und zweiten Typs (2,3,5), abhängig von der Rotationsrichtung des Körpers (11) unterschiedlich ist.

4. Vorrichtung (10) nach einem der Ansprüche 1 bis 3, wobei das erste Element zumindest ein Teil eines ersten Lüfterflügels (1,2,3,4,5,6) und/oder das zweite Element zumindest ein Teil eines zweiten Lüfterflügels (1,2,3,4,5,6) ist.

5. Vorrichtung (10) nach einem der Ansprüche 1 bis 4, wobei das erste Element (1,2,3,4,5,6) und/oder das zweite Element (1,2,3,4,5,6) anisotrop ausgebildet ist, wobei die Anisotropie insbesondere die Anströmung des zumindest einen Elementes bei einer Rotation betrifft.

6. Vorrichtung (10) nach einem der Ansprüche 2 bis 5, wobei das erste Element (1,2,3,4,5,6) eine vom zweiten Element (1,2,3,4,5,6) unterschiedliche Geometrie aufweist.

7. Vorrichtung (10) nach einem der Ansprüche 2 bis 6, wobei das erste Element (1,2,3,4,5,6) eine vom zweiten Element (1,2,3,4,5,6) unterschiedliche Oberfläche aufweist.

8. Vorrichtung (10) nach einem der Ansprüche 1 bis 7, mit einer Vielzahl von Elementen (1,2,3,4,5,6), wobei deren Abfolge anisotrop, insbesondere spiegelsymmetrisch bezüglich der Rotationsrichtung, ist.

9. Vorrichtung (10) nach einem der Ansprüche 1 bis 8, wobei ein Sensor (12) zur Erfassung des Schalldrucks vorgesehen ist.

10. Vorrichtung (10) nach Anspruch 9, wobei der Sensor (12) ein Mikrofon ist.

11. Vorrichtung (10) nach einem der Ansprüche 1 bis 10, mit einem Datenspeicher, welcher erste Schalldruckdaten einer Rotationsrichtung eines ersten Zeitraums speichert und einer Vergleichseinrichtung (14), welche die ersten Schalldruckdaten mit zweiten Schalldruckdaten eines dem ersten Zeitraum nachfolgenden zweiten Zeitraums vergleicht.

12. Verfahren zur Erfassung einer Rotation eines rotierbaren Körpers (1), wobei ein durch die Rotation hervorgerufener Schalldruck ermittelt wird und auf Grundlage des ermittelten Schalldrucks eine Rotationsrichtung erkannt wird.

13. Verfahren nach Anspruch 12, wobei der ermittelte Schalldruck mit einem zuvor ermittelten Schalldruck korreliert wird.

14. Verfahren nach Anspruch 12 oder 13, wobei ein anisotroper Schalldruck erzeugt wird und/oder erkannt wird.

15. Verfahren nach Anspruch 12 bis 14, wobei eine Vorrichtung (10) nach einem der Ansprüche 1 bis 11 verwendet wird.
